# EUROPÄISCHE PATENTANMELDUNG

(11) **EP 1 093 001 A2**
(43) Veröffentlichungstag der Anmeldung: **18.04.2001**
(21) Anmeldenummer: 00121648.0
(22) Anmeldetag: 04.10.2000
(51) Int. Cl.: G02B 21/00

(54) **Konfokales Laserscan-Mikroskop**

(30) Priorität: 12.10.1999 DE 19949272
(71) Anmelder: Leica Microsystems Heidelberg GmbH, 68165 Mannheim (DE)
(72) Erfinder: Knebel, Werner, Dr., 76709 Kronau (DE); Ulrich, Heinrich, Dr., 69121 Heidelberg (DE)
(74) Vertreter: Naumann, Ulrich, Dr.-Ing.

(57) **Zusammenfassung**

Konfokales Laserscan-Mikroskop mit mindestens einer Laserlichtquelle (1) zur Beleuchtung eines Objekts und mindestens einem Detektor (4) zur Detektion des vom Objekt kommenden Detektionslichts, ist zur Erweiterung der CLSM-Anwendungen hinsichtlich der Verwendung von Lichtquellen bei verringerten Anschaffungs- und Betriebskosten dadurch gekennzeichnet, dass eine Zusatzlichtquelle (5, 8) vorgesehen ist, die keine Single-Mode (TEM₀₀) Laserlichtquelle ist.

## Beschreibung

Die vorliegende Erfindung betrifft ein konfokales Laserscan-Mikroskop mit mindestens einer Laserlichtquelle zur Beleuchtung eines Objekts und mindestens einem Detektor zur Detektion des vom Objekt kommenden Detektionslichts.

Laserscan-Mikroskope der gattungsbildenden Art sind seit geraumer Zeit bekannt und werden unter anderem in der Halbleiterindustrie zur Waverinspektion sowie in der biomedizinischen Grundlagenforschung eingesetzt. Als Lichtquelle für konfokale Laserscan-Mikroskope (CLSM) dienen Single-Mode-Laser, die in der Lage sind, in der Fokalebene eines Mikroskopobjektivs eine beugungsbegrenzte Intensitätsverteilung zu erzeugen. Hierzu wird üblicherweise das Laserlicht eines Single-Mode-Lasers auf eine kleine Beleuchtungsapertur mit einem Durchmesser von ca. 100 - 300 µm fokussiert, so dass diese Beleuchtungsapertur die punktförmige Lichtquelle des CLSM's darstellt.

Lichtquellen, die keine Single-Mode-Laser sind, können keine konfokale Beleuchtung erzeugen, die eine ausreichende Leuchtdichte in Form einer beugungsbegrenzten Intensitätsverteilung im Mikroskopobjektivfokus aufweist. Die emittierte Lichtintensität einer räumlich ausgedehnten Nicht-Single-Mode-Laserlichtquelle läßt sich nicht hinreichend gut auf eine derart kleine Beleuchtungsapertur fokussieren, so dass die resultierende Leuchtdichte im Mikroskopobjektivfokus für die meisten CLSM-Anwendungen zu gering ist. Lediglich beispielhaft wird auf die US 5 578 818 verwiesen, in der eine LED (Light-Emitting-Diode) als Lichtquelle für ein CLSM verwendet wird, bei der diese Probleme auftreten.

Abhängig von der CLSM-Anwendung werden Laser eingesetzt, deren Wellenlängenbereiche sich vom UV- bis zum IR-Bereich erstrecken. Insbesondere Laser, die für die CLSM-Mikroskopie geeignet sind und Licht im UV-Bereich emittieren, weisen im Allgemeinen eine erhebliche Baugröße auf und erfordern eine ganz besondere Laborinfrastruktur, beispielsweise für einen aufwendigen Wasserkühlungskreislauf. Insbesondere wirken die hohen Anschaffungs- und Betriebskosten eines solchen UV-Lasersystems einem verbreiteten Einsatz entgegen.

Der vorliegenden Erfindung liegt daher die Aufgabe zugrunde, ein konfokales Laserscan-Mikroskop der gattungsbildenden Art derart auszubilden und weiterzuentwickeln, so dass für CLSM-Anwendungen auch Lichtquellen mit geringen Anschaffungs- und Betriebskosten eingesetzt werden können.

Die voranstehende Aufgabe wird durch die Merkmale des Patentanspruches 1 gelöst. Danach ist ein konfokales Laserscan-Mikroskop dadurch gekennzeichnet, dass eine Lichtquelle vorgesehen ist, die keine Single-Mode (TEM₀₀) Laserlichtquelle ist und dass zum Erzielen eines hinreichenden Signal-zu-Rausch Verhältnisses der Bilddaten des Objekts die Systemparameter des Laserscan-Mikroskops einstellbar sind.

Erfindungsgemäß ist zunächst erkannt worden, dass durch das Einkoppeln alternativer Lichtquellen in ein CLSM das Signal-zu-Rausch Verhältnis der gemessenen Bliddaten aufgrund der geringen Beleuchtungsdichte der Intensitätsverteilung in der Fokusebene des Mikroskopobjektivs eine Datenauswertung im üblichen Sinne nicht möglich ist. Die Systemparameter eines CLSM's lassen sich jedoch derart einstellen, dass eine Verwendung einer Zusatzlichtquelle bei einem hinreichenden Signal-zu-Rausch-Verhältnis der Bilddaten möglich ist. Als Systemparameter könnten beispielsweise der Durchmesser des Beleuchtungs- bzw. Detektionspinholes, die Aufnahmedauer oder die Verstärkung des Detektionssignals geeignet sein.

Die Zusatzlichtquelle kann zur Datenaufnahme gleichzeitig mit der Laserlichtquelle des CLSM's betrieben werden. Hierdurch können die Objekteigenschaften hinsichtlich des Lichts der Laserlichtquelle und der Zusatzlichtquelle simultan detektiert werden, wenn hierfür im Strahlengang des CLSM's geeignete Filter bzw. Strahlteiler vorhanden sind. Werden keine entsprechenden Filter/Strahlteiler verwendet, so kann die Zusatzlichtquelle alternativ zu der Laserlichtquelle betrieben werden. Hierbei könnte zunächst eine Datenaufnahme durchgeführt werden, die die Objekteigenschaften mit der Laserlichtquelle detektiert und anschließend eine Datenaufnahme unter Verwendung der Zusatzlichtquelle durchführen.

In einer konkreten Ausführungsform ist das Detektionslicht gemäß dem konfokalen Prinzip detektierbar. Somit wird das Detektionslicht des Objekts bei einer Beleuchtung des Objekts sowohl mit der Laserlichtquelle als auch mit der zusätzlichen Lichtquelle konfokal detektiert. Da das Detektionslicht des Objekts sowohl bei Beleuchtung mit einer Laserlichtquelle als auch mit einer Zusatzlichtquelle den gleich optischen Strahlengang durchläuft, ist hiermit sichergestellt, dass die so aufgenommenen Bilddaten hinsichtlich ihrer räumlichen Koordinaten übereinstimmen (Co-Lokalisation).

Ganz Allgemein ist es denkbar, dass die Zusatzlichtquelle als Halogen-Metalldampflampe, als Entladungslampe oder als Lichtbogenlampe ausgeführt ist. Hinsichtlich einer spezielle CLSM-Anwendung ist in Abhängigkeit der besonderen Eigenschaften des dafür benötigten Lichts die jeweils verwendete Zusatzlichtquelle auszuwählen und in das CLSM einzukoppeln.

Eine HBO- oder XBO-Lampe könnte als Zusatzlichtquelle eingesetzt werden. In vorteilhafter Weise ist eine HBO-Lampe in der Regel bei konfokalen Fluoreszenz-Laserscan-Mikroskopen bereits vorhanden, da diese auch oft als klassisches Fluoreszenzmikroskop betrieben werden, so dass eine entsprechende Verwendung zur konfokalen Detektion hierfür mit geringem zusätzlichem Konstruktionsaufwand und somit kaum mit Mehrkosten verbunden ist. Insbesondere die hohe Lichtemission im UV- und im Sichtbaren Bereich ermöglichen eine Vielzahl von CLSM-Anwendungen.

Weiterhin könnte als Zusatzlichtquelle ein Halogenlampe eingesetzt werden. Einerseits könnte es sich um eine Halogenlampe handeln, die auf eine spezielle Anwendung abgestimmt ist, andererseits könnte die Halogenlampe des konventionellen Mikroskops verwendet werden, die ― wie auch die HBO-Lampe ― in der Regel in einem CLSM vorhanden ist.

Als Zusatzlichtquelle könnte ebenfalls ein Multi-Mode-Laser dienen. Auch der Einsatz einer LED oder einer Elektronenstrahlkollisionslichtquelle ist denkbar.

Die Einkopplung von Licht der Zusatzlichtquelle in den Strahlengang des CLSM erfolgt mit Hilfe von Spiegeln, Linsen und Filtern. Hierbei kann mit Linsen die Strahleigenschaft des Lichts der Zusatzlichtquelle beeinflußt werden, mit einem bzw. mehreren Spiegeln kann die Strahlrichtung des Lichts der Zusatzlichtquelle verändert und schließlich mit einem Filter bzw. Strahlvereiniger in den Strahlengang des CLSM eingekoppelt werden. Dieser Filter/Strahlvereiniger könnte beispielsweise als dichroitischer Strahlteiler ausgeführt sein.

In vorteilhafter weise könnte die Einkopplung von Licht der Zusatzlichtquelle in den Strahlengang des CLSM mit Hilfe einer Lichtleitfaser realisiert sein. Die Verwendung einer Lichtleitfaser bringt die bekannten Vorteile eines solchen optischen Elements mit sich, nämlich eine Vibrationsentkopplung zwischen CLSM und Zusatzlichtquelle, einen flexiblen und im Hinblick auf Sicherheitsbestimmungen unbedenklichen Lichttransport.

Die Einkopplung von Licht der Zusatzlichtquelle in die Lichtleitfaser erfolgt in vorteilhafter Weise ohne Einkopplungsoptik. Zwischen dem Lampenkörper und dem Lichtleitfaserende befindet sich also keine Fokussierungsoptik, beispielsweise in Form einer Linse, sondern das Lichtleitfaserende ist direkt am Lampenkörper positioniert. Hierzu wird lediglich eine geeignete Vorrichtung bereitgestellt, die die Position des Lichtleitfaserendes relativ zur Lampe einstellt bzw. fixiert.

Die Lichtleitfaser ist bezüglich des Wellenlängenbereichs des eingekoppelten Lichts entweder als Single- oder Multi-Mode-Lichtleitfaser ausgeführt. Im Hinblick auf die Gesamtintensität des einzukoppelnden Lichts der Zusatzlichtquelle und die Intensitätsverteilung über den Querschnitt des aus der Lichtleitfaser austretenden Lichtstrahls kann eine Multi-Mode Lichtleitfaser bevorzugt eingesetzt werden. Diese vermag mehr Licht zu transportieren, wenn das Strahlprofil des aus der Lichtleitfaser austretenden Lichts eine nebengeordnete Rolle spielt.

In einer konkreten Ausführungsform erfolgt die Beleuchtung mit der Zusatzlichtquelle derart, dass in der Objektebene des Mikroskopobjektivs eine weitgehend punktförmige Intensitätsverteilung vorliegt. Eine solche Beleuchtung könnte mit einer geeigneten Anordnung von Spiegeln, Linsen, Beleuchtungsaperturen und Filtern realisiert werden. Letztendlich ist die Strahlführung des Lichts der Zusatzlichtquelle vergleichbar zu der der Laserlichtquelle des CLSM. In besonders vorteilhafter Weise ist die punktförmige Beleuchtung beugungsbegrenzt. Hiermit wäre dann eine konfokale Beleuchtung durch die Zusatzlichtquelle gegeben.

In einer weiteren Ausführungsform ist die Beleuchtung mit der Zusatzlichtquelle in einer konventionellen Mikroskop-Hellfeldbeleuchtung realisiert. Die Einkopplungsoptik der Zusatzlichtquelle in den Strahlengang des CLSM's ist derart konfiguriert, dass das gesamte Objektfeld des Mikroskopobjektivs mit Licht der Zusatzlichtquelle beleuchtbar ist. Das bei dieser Beleuchtungsart vom Objekt zurückkommende Detektionslicht wird in einer vorteilhaften Ausführungsform gemäß dem konfokalen Prinzip mit dem Detektor des CLSM detektiert. In vergleichbarer Weise ist eine Beleuchtung mit der Zusatzlichtquelle in einer konventionellen Mikroskop-Dunkelfeldbeleuchtung denkbar.

Die Beleuchtung durch die Zusatzlichtquelle in der Objektebene könnte auch in Form eines Beleuchtungsmuster erfolgen. Auch hierbei ist die Größe und die Form des Beleuchtungsmusters der Einkopplungsoptik durch die Zusatzlichtquelle formbar. Beispielsweise durch das Einbringen von austauschbaren Projektionsmustern läßt sich so in vorteilhafter Weise das Beleuchtungsmuster in der Objektebene variieren. In einer konkreten Anwendung ist das Beleuchtungsmuster in der Objektebene kreisförmig und weist einen Durchmesser von 10 µm auf.

Das mit einer Zusatzlichtquelle ausgestaltete CLSM kann insbesondere zur Fluoreszenzmikroskopie eingesetzt werden. So könnte beispielsweise ein CLSM mit einer HBO-Lampe als Zusatzlichtquelle verwendet werden, um mit dem UV-Anteil des Emissionspektrums der HBO-Lampe Fluoreszenzfarbstoffe anzuregen, die ihr Absortionsspektrum im UV-Bereich haben. Hierdurch ist die Anschaffung eines teuren, platzaufwendigen und in der Bedienung umständlichen UV-Laser nicht notwendig. Ebenso ist es denkbar, mit einem CLSM, das eine entsprechende Zusatzlichtquelle aufweist, Fluoreszenzfarbstoffe anzuregen, die ihr Absortionsspektrum im sichtbaren oder im IR-Bereich haben.

Insbesonders für die medizinische Grundlagenforschung könnte die FRET-Mikroskopie mit einem erfindungsgemäßen Mikroskop durchgeführt werden. Bei dieser Technik werden Farbstoffe durch Beleuchtung angeregt, die die Anregungsenergie oder Teile davon Strahlungslos an benachbarte Farbstoffe abgeben, die dadurch ihrerseits angeregt werden und charakteristische elektromagnetische Strahlung emittieren. Beispielsweise würde sich CFP (Cyan Flourescent Protein) als Donator und EGFP (Enhanced Green Flourescent Protein) als Akzeptor anbieten. Weiterhin könnten mit einem erfindungsgemäßen Mikroskop Floureszenzfarbstoffe angeregt werden, die zum Caged-Compound geeignet sind. Diese Anwendung setzt Anregungslicht im UV-Bereich voraus, was beispielsweise mit einer HBO-Lampe als Zusatzlichtquelle realisiert werden könnte.

In besonders vorteilhafter Weise wird zum Erzielen eines brauchbaren Signal-Zu-Rausch Verhältnisses der Bilddaten das Objekt hinreichend oft abgerastert, um die so aufgenommenen Bilddaten mitteln zu können. Da die Einkopplung einer Zusatzlichtquelle verglichen zur Laserlichtquelle eines CLSM's im Allgemeinen eine geringere Lichtintensität im Objektbereich zur Folge hat, ist das Signal des von der Zusatzlichtquelle hervorgerufenen Detektionslichts niedriger als das von der Laserlichtquelle des CLSM hervorgerufenen Detektionslichts. Ein mehrmalige Datenaufnahme des gleichen Objektbereiches ermöglicht eine statistische Mittelung, die dem vermindertem Detektionssignal Rechnung trägt. In gleicher Weise kann beim abrastern des Objekts die Integrationszeit pro Pixel entsprechend gewählt werden. So könnte beispielsweise die Integrationszeit pro Pixel für das von der Zusatzlichtquelle hervorgerufene Detektionslicht fünfmal so lang sein, wie die für das von der Laserlichtquelle des CLSM's hervorgerufene Detektionslicht. Dies wäre folglich mit einer fünffach längeren Datenaufnahme verbunden.

Ein brauchbares Signal-zu-Rausch-Verhältnis könnte auch durch die Wahl des Durchmessers des Detektionspinholes erzielt werden. Ein größerer Durchmesser des Detektionspinholes resultiert in einem erhöhten Signal-zu-Rausch-Verhältnis der detektierten Bilddaten, die Ortsauflösung der entsprechenden Datenaufnahme ist in diesem Fall dann entsprechend den grundlegenden optischen Zusammenhänge reduziert.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche, andererseits auf die nachfolgende Erläuterung von Ausführungsbeispielen der Erfindung anhand der Zeichnungen zu verweisen. In Verbindung mit der Erläuterung der bevorzugten Ausführungsbeispiele anhand der Zeichnungen werden auch im Allgemeinen bevorzugte Ausgestaltungen und Weiterbildungen der Lehre erläutert. In den Zeichnungen zeigt
- Fig. 1: in einer schematischen Darstellung ein erstes Ausführungsbeispiel eines erfindungsgemäßen konfokalen Laserscan-Mikroskops,
- Fig. 2: in einer schematischen Darstellung ein weiteres Ausführungsbeispiel eines erfindungsgemäßen konfokalen Laserscan-Mikroskops.

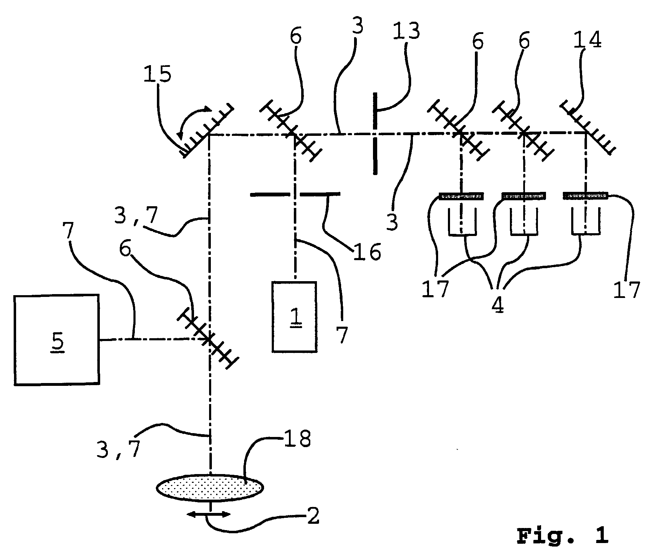

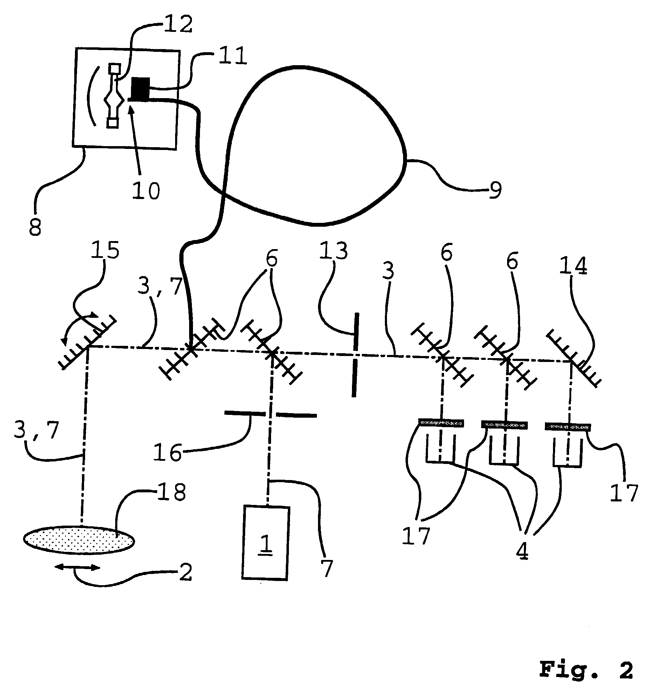

Die Fig. 1 und 2 zeigen jeweils ein konfokales Laserscan-Mikroskop mit einer Laserlichtquelle 1. Die Laserlichtquelle 1 dient zur Beleuchtung eines Objekts 2. Das vom Objekt 2 kommende Detektionslicht 3 wird mit den drei Detektoren 4 hinsichtlich seiner spektralen Eigenschaften detektiert.

In dem Ausführungsbeispiel gemäß Fig. 1 ist als Zusatzlichtquelle eine HBO-Lampe 5 vorgesehen, deren Licht 7 mit Hilfe eines dichroitischen Strahlteilers 6 in den Beleuchtungsstrahlengang 7 des CLSM eingekoppelt wird.

In dem Ausführungsbeispiel gemäß Fig. 2 wird die als XBO-Lampe 8 ausgeführte Zusatzlichtquelle mit Hilfe einer Lichtleitfaser 9 in den Strahlengang des CLMS eingekoppelt. Das Licht der XBO-Lampe 8 wird direkt und ohne Verwendung von zusätzlicher Einkopplungsoptik in das Eintrittsende der Lichtleitfaser 10 eingekoppelt. Das Lichtleitfaserende 10 ist mit der Positionierungsvorrichtung 11 direkt am Lampenkörper 12 der XBO-Lampe positionierbar und fixierbar. Das Licht der XBO-Lampe 8 tritt am anderen Lichtleitfaserende aus und wird über den dichroitischen Strahlteiler 6 in den Beleuchtungsstrahlengang 7 eingekoppelt. Die Lichtleitfaser 9 ist bezüglich des Wellenlängenbereichs des Lichts der XBO-Lampe 8 als Multi-Mode Lichtleitfaser ausgeführt.

Das Anregungslicht 7 der HBO-Lampe 5 aus Fig.1 bedingt aufgrund der Einkopplungsoptik und der Strahlführung im CLSM eine konventionelle Mikroskop-Hellfeldbeleuchtung in der Objektebene.

In dem Ausführungsbeispiel gemäß Fig. 2 ist die Beleuchtung des Anregungslichts 7 der XBO-Lampe 8 aufgrund der Strahlführung im CLSM in einer punktförmigen Beleuchtung realisiert.

Das erfindungsgemäße konfokale CLSM gemäß Fig. 1 wird zur Floureszenzmikroskopie verwendet, im speziellen in der biologischen Grundlagenforschung. In dieser konkreten Anwendung werden mit dem Laser 1 ― der als Argon-Krypton Laser ausgeführt ist und Licht der Wellenlängen 488 nm, 568 nm und 647nm emittiert ― Fluoreszenzfarbstoffe angeregt, die spezifisch an bestimmte Objektbereiche von biologischen Objekten gebunden sind. Mit der HBO-Lampe 5 als Zusatzlichtquelle wird der Floureszenzfarbstoff DAPI angeregt, der sich in einem Bereich zwischen 355 und 375 nm anregen läßt.

In beiden Ausführungsbeispielen wird zum Erzielen eines brauchbaren Signal-zu-Rausch-Verhältnisses der Bilddaten das Objekt fünfmal abgerastert, um die so aufgenommenen Bilddaten zu mitteln. Beim Abrastern des Objekts ist die Integrationszeit für die Detektion des von der Zusatzlichtquelle 5, 8 induzierten Detektionslichts fünfmal so lang wie die des von der Laserlichtquelle induzierten Detektionslichts. Der Durchmesser des Detektionspinholes bei der Detektion von Detektionslicht, das durch die Zusatzlichtquelle 5, 8 induziert wurde, ist dreimal so groß wie bei der Detektion des Detektionslichts, das durch die Laserlichtquelle 1 induziert wurde.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

## Patentansprüche

1. Konfokales Laserscan-Mikroskop mit mindestens einer Laserlichtquelle (1) zur Beleuchtung eines Objekts (2) und mindestens einem Detektor (4) zur Detektion des vom Objekt kommenden Detektionslichts (3),
**dadurch gekennzeichnet,** dass eine Zusatzlichtquelle (5, 8) vorgesehen ist, die keine Single-Mode (TEM₀₀) Laserlichtquelle ist und dass zum Erzielen eines hinreichenden Signal-zu-Rausch-Verhältnisses der Bilddaten des Objekts die Systemparameter des Laserscan-Mikroskops einstellbar sind.

2. Mikroskop nach Anspruch 1, dadurch gekennzeichnet, dass die Zusatzlicht quelle (5, 8) gleichzeitig oder alternativ mit der Laserlichtquelle (1) betrieben wird.

3. Mikroskop nach Anspruch 1 oder 2, dadurch gekennzeichnet, dass das Detektionslicht (3) gemäß dem konfokalen Prinzip detektierbar ist.

4. Mikroskop nach einem der Ansprüche 1 bis 3, dadurch gekennzeichnet, dass die Zusatzlichtquelle (5, 8) als Halogen-Metalldampflampe ausgeführt oder als Entladungslampe oder als Lichtbogenlampe oder als HBO-Lampe oder als XBO-Lampe oder als Halogenlampe oder als Multi-Mode Laser oder als LED (Light-Emitting-Diode) oder als Elektronenstrahlkollisionslichtquelle ausgeführt ist.

5. Mikroskop nach einem der Ansprüche 1 bis 4, dadurch gekennzeichnet, dass die Einkopplung von Licht der Zusatzlichtquelle (5, 8) in den Strahlengang des konfokalen Laserscan-Mikroskops mit Hilfe von Spiegeln, Linsen und Filtern (6) oder mit Hilfe einer Lichtleitfaser (9) erfolgt, wobei die Einkopplung von Licht der Zusatzquelle (8) in die Lichtleitfaser (9) ohne Einkopplungsoptik erfolgen kann und wobei das Lichtleitfaserende (10) direkt am Lampenkörper (12) positioniert sein kann.

6. Mikroskop nach Anspruch 5, dadurch gekennzeichnet, dass die Lichtleitfaser (9) bezüglich des Wellenlängenbereichs des eingekoppelten Lichts eine Single-Mode Lichtleitfaser oder eine Multi-Mode-Lichtleitfaser ist.

7. Mikroskop nach einem der Ansprüche 1 bis 6, dadurch gekennzeichnet, dass die Beleuchtung mit der Zusatzlichtquelle (5, 8) in der Objektebene weitgehend punktförmig erfolgt, wobei die punktförmige Beleuchtung beugungsbegrenzt sein kann.

8. Mikroskop nach einem der Ansprüche 1 bis 7, dadurch gekennzeichnet, dass die Beleuchtung mit der Zusatzlichtquelle (5, 8) in einer konventionellen Mikroskop-Hellfeldbeleuchtung oder in einer konventionellen Mikroskop-Dunkelfeldbeleuchtung und/oder in der Objektebene mit einem Beleuchtungsmuster erfolgt, wobei das Beleuchtungsmuster kreisförmig sein kann.

9. Mikroskop nach einem der Ansprüche 1 bis 8, gekennzeichnet durch die Verwendung in der Fluoreszenzmikroskopie, wobei Fluoreszenzfarbstoffe anregbar sind, die ihr Absorbtionsspektrum vorzugsweise im UV-Bereich oder im IR-Bereich oder im sichtbaren Bereich haben.

10. Mikroskop nach Anspruch 9, dadurch gekennzeichnet, dass Fluoreszenzfarbstoffe anregbar sind, die zum FRET (Floureszenz-Resonanz-Energy-Transfer) und/oder zum Caged-Compound geeignet sind.

11. Mikroskop nach einem der Ansprüche 1 bis 10, dadurch gekennzeichnet, dass zum Erzielen eines brauchbaren Signal-zu-Rausch-Verhältnisses der Bilddaten das Objekt hinreichend oft abgerastert wird, um die so aufgenommenen Bilddaten zu mitteln, wobei beim Abrastern des Objektivs die Integrationszeit pro Pixel entsprechend gewählt werden kann und wobei der Durchmesser des Detektionspinholes entsprechend gewählt werden kann.
